Europäisches Patentamt

(19) European Patent Office

Office européen des brevets

(11) Publication number: **0 237 903**
**B1**

# EUROPEAN PATENT SPECIFICATION

(45) Date of publication of the patent specification:
**25.10.89**

(21) Application number: **87103356.9**

(22) Date of filing: **09.03.87**

(51) Int. Cl.⁴: **B65H 19/26, B65H 19/28**

(54) Automatic cutting and winding apparatus for a web-like material such as a film.

(30) Priority: **17.03.86 JP 58818/86**
**03.06.86 JP 127331/86**
**03.06.86 JP 127332/86**
**03.06.86 JP 127333/86**
**23.07.86 JP 171876/86**
**04.02.87 JP 22491/87**

(43) Date of publication of application:
**23.09.87 Bulletin 87/39**

(45) Publication of the grant of the patent:
**25.10.89 Bulletin 89/43**

(84) Designated Contracting States:
**DE FR GB**

(56) References cited:
**DE-A- 2 301 193**
**DE-A- 3 003 403**
**US-A- 3 612 270**

(73) Proprietor: **MITSUBISHI JUKOGYO KABUSHIKI KAISHA,**
**5-1, Marunouchi 2-chome Chiyoda-ku, Tokyo 100(JP)**

(72) Inventor: **Suzuki, Tsutomu Nagoya Machinery Works,**
**Mitsu Jukogyo K.K. 1,Aza Takamichi Iwatsuka-cho,**
**Nakamura-ku Nagoya-shi Aichi-ken(JP)**
Inventor: **Nakamura, Katsumi Nagoya Machinery Works,**
**Mitsu Jukogyo K.K. 1,Aza Takamichi Iwatsuka-cho,**
**Nakamura-ku Nagoya-shi Aichi-ken(JP)**
Inventor: **Kishimoto, Kazuo Nagoya Machinery Works,**
**Mitsu Jukogyo K.K. 1,Aza Takamichi Iwatsuka-cho,**
**Nakamura-ku Nagoya-shi Aichi-ken(JP)**

(74) Representative: **Henkel, Feiler, Hänzel & Partner,**
**Möhlstrasse 37, D-8000 München 80(DE)**

ACTORUM AG

## Description

The present invention relates to a turret type automatic cutting and winding apparatus of the kind defined by the precharacterizing features of claim 1.

In contrast to previous turret type automatic cutting and winding apparatus of the kind where an adhesive tape is used on the new core or where the upstream cut end portion of the web-like material is wrapped directly around the new core, the electrostatic charging of the upstream cut end portion of the web-like material and/or the surface of the new core, in accordance with the apparatus of the kind defined at the preamble and known from the EP-A 0 183 135, allows the transfer of said cut end portion to the new core under a high yield rate without generating scratches on the web-like material as it is the case with previous turret type automatic cutting and winding apparatus. This improved apparatus, however, suffers on a somewhat poor quality of the surface of both, the upstream and downstream cut end portions due to an unprecise cutting action, the cutting point of which is not well defined.

Therefore it is the object of the present invention to improve the cutting quality of the apparatus of the kind defined at the preamble.

This object is attained by the characterizing features of claim 1. Advantageous developments of the apparatus according to the invention are given by the subclaims.

Therefore, in accordance with the invention the cutting point of the cutting action is well defined, because the tension in the web-like material is increased by the interaction of the pair of press members with the cutter in such a kind that the web-like material is cut momentarily.

The advantages of the present invention will become more apparent by reference to the following description of preferred embodiments of the invention taken in conjunction with the accompanying drawings, wherein:

Figs. 1, 2 and 3 are side views showing a first preferred embodiment of the present invention, respectively, in different states of operation;

Fig. 4 is a side view of an essential part of the same preferred embodiment in the case where an air below nozzle is formed in a press member;

Figs. 5, 6 and 7 are side views showing a second preferred embodiment of the present invention, respectively, in different states of operation;

Figs. 8 and 9 are side views showing a third preferred embodiment of the present invention, respectively, in different states of operation;

Figs. 10 and 11 are a front view and a cross-section side view, respectively, of a cutter to be used in the third preferred embodiment;

Fig. 12 is a plan view showing a cut end configuration of a film that has been cut by the cutter shown in Figs. 10 and 11;

Figs. 13, 14 and 15 are side views showing a fourth preferred embodiment of the present invention, respectively, in different states of operation;

Fig. 16 is a side view of an essential part of the same preferred embodiment in the case where an air blow nozzle is disposed on a swingable arm;

Figs. 17, 19 and 20 are side views showing a fifth preferred embodiment of the present invention, respectively, in different states of operation;

Fig. 18 is a detailed side view of a portion encircled at H in Fig. 17;

Fig. 21 is a side view showing a mode of operation of an essential part of the same preferred embodiment;

Fig. 22 is a plan view showing a cutting configuration at an end of a film according to the same preferred embodiment;

Figs. 23, 24 and 25 are side views showing a sixth preferred embodiment of the present invention, respectively, in different states of operation;

Fig. 26 is a schematic block diagram of a position control mechanism for an expander roll in the same preferred embodiment;

Fig. 27 is a schematic view showing an essential part of the same preferred embodiment;

Fig. 28 is a schematic view as viewed in the direction of an arrow A in Fig. 27.

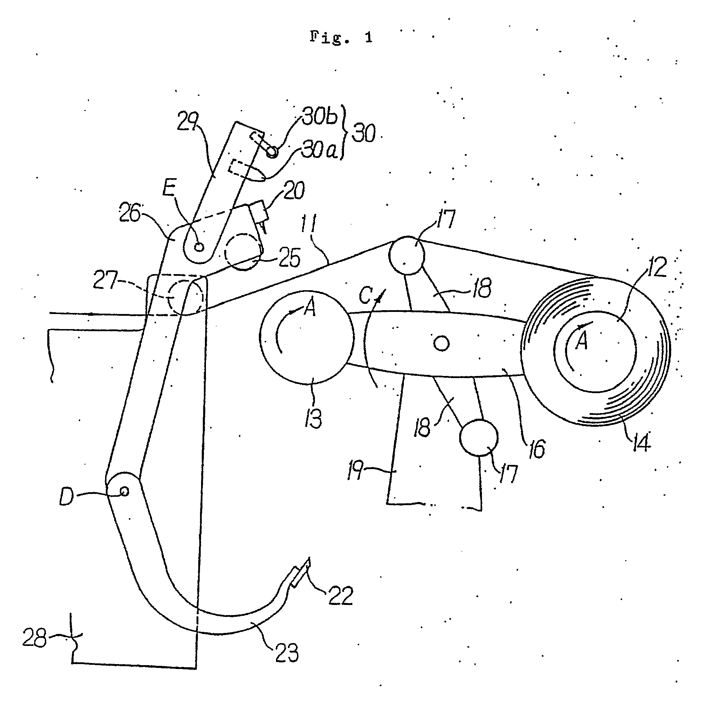

A first preferred embodiment of the present invention is illustrated in Figs. 1 to 4, in which reference numeral 11 designates a film, numerals 12 and 13 designate cores, and these cores 12 and 13 are pivotably supported from the opposite end portions of a turret 16 so as to be rotatable in the direction of an arrow A as driven by a driving device not shown, the turret 16 being mounted on a frame 19 so as to be rotatable about its center in the direction of an arrow C. In addition, arms 18 are provided on the opposite sides of the central portion of the turret 16 as projecting therefrom, and at the respective tip end portions of the arms 18 are pivotably supported guide rolls 17, respectively. Reference numeral 14 designates a mill roll formed by winding up the film 11 around the core 12.

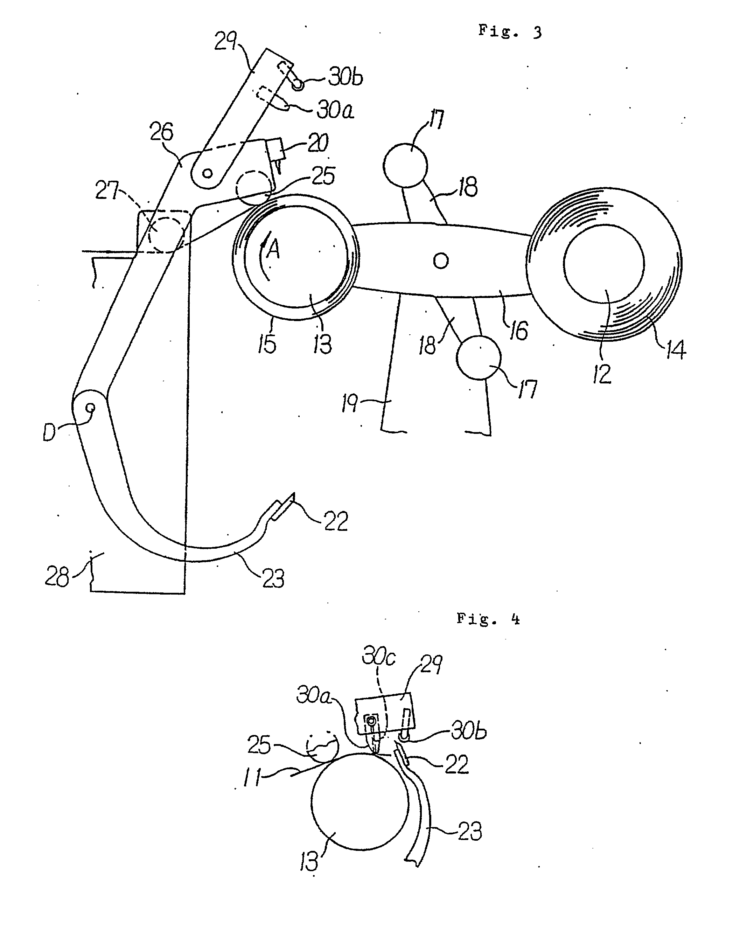

On the film feed side of the above-described frame 19 is disposed another frame 28, on which a guide roll 27 is pivotably mounted along a film feed passageway, and also on the frame 28, adjacent to the guide roll 27 are pivotably mounted swingable arms 26 and 23 which can swing about an identical axis D. At the tip end of the swingable arm 23 is mounted a cutter 22. Also, on the swingable arm 26 are mounted a press roll 25 and electrostatic charging means 20. Furthermore, at the tip end of the swingable arm 26 is pivotably mounted an arm 29 which can likewise swing about a center point E, and at the tip end of the arm 29 are mounted a pair of press members 30 consisting of a press bar 30a and a press rod 30b. In addition, an air blow nozzle 30c could be formed in the press member 30 so that a film end a may be pressed against the core 13 by air as shown in Fig. 4. The above-referred electrostatic charging means 20 is of well-known corona discharge charging type, and an electrode section of an electrostatic charging device is employed therefor. It is to be noted that a power supply section and wirings of the electrostatic charging device are omitted from illustration.

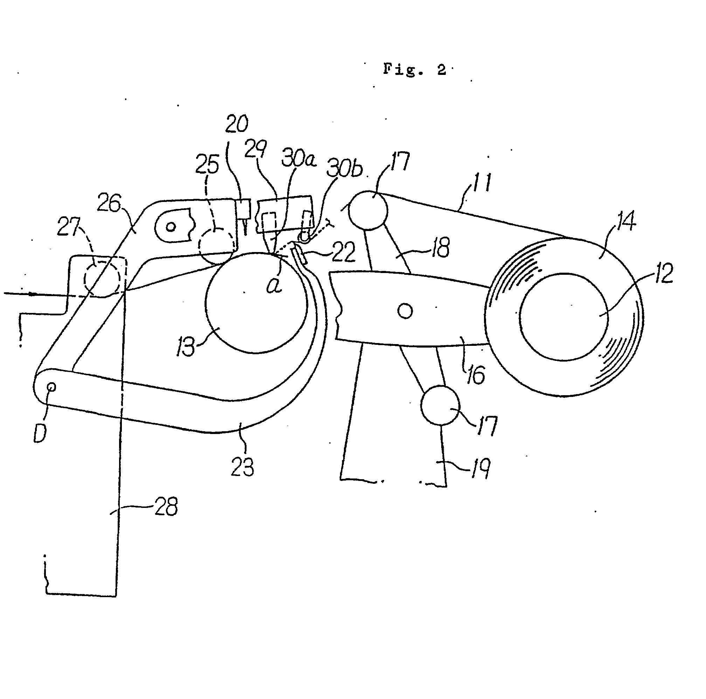

Now description will be made on the operation in the case where tapeless winding of a film is carried out by making use of the apparatus according to the above-described embodiment of the present invention. Fig. 1 shows the state of the apparatus at the time point when the mill roll 14 on the right side core 12 as viewed in the figure has reached a full amount. The wound length of the film 11 is measured by a wound length counter not shown, and when it has reached the full amount, the arm 23 is actuated and is made to stand by at the position shown in Fig. 2, subsequently the swingable arm 26 is actuated to press the film 11 against the new core 13 with the press roll 25, at the same time the swingable arm 29 is made to descend so that the pair of press members 30 may depress the film 11 towards the cutter 22, and thereby the tension in the film 11 is increased to cut the film 11 momentarily.

Simultaneously with cutting, electric charge is given from the electrostatic charging means 20 to a cut end portion a of the film 11 to make it adsorbed onto the core 13 for carrying out wrapping, and thus automatic cutting and winding are effected in a tapeless manner. It is to be noted that blowing of air from the air blow nozzle 30c in Fig. 4 is carried out simultaneously with charging by the electrostatic charging means 20.

By employing the above-described construction, in order to minimize the film cut end a the stop position of the cutter 22 can be made as close as possible to the core 13 as shown in Fig. 2. In addition, by pivotably mounting the arm 29, which is short in arm length and light in weight, at the tip end portion of the arm 26, high-speed cutting becomes possible with a small swinging operation. Subsequently, when the winding has been finished, the arms 23 and 29 are actuated to return them to the state shown in Fig. 3, and winding of the film 11 for producing a mill roll 15 is carried out on the new core 13.

In the above-described embodiment, the press roll 25 can be used as a lay-on roll for controlling a winding tightness of a mill roll. Furthermore, as the electrostatic charging means, air blow type electrostatic charging means could be employed. The interval between the press bar 30a and the press rod 30b could be made variable so that the apparatus can be adapted to change of a type and a thickness of the film, and the air blow nozzle can be provided separately from the press members 30.

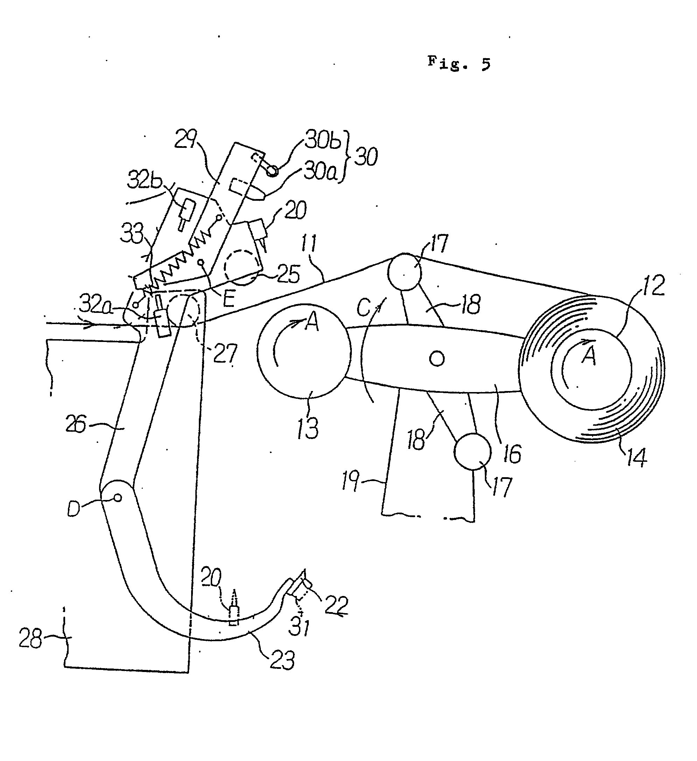

Now a second preferred embodiment of the present invention will be described with reference to Figs. 5 to 7.

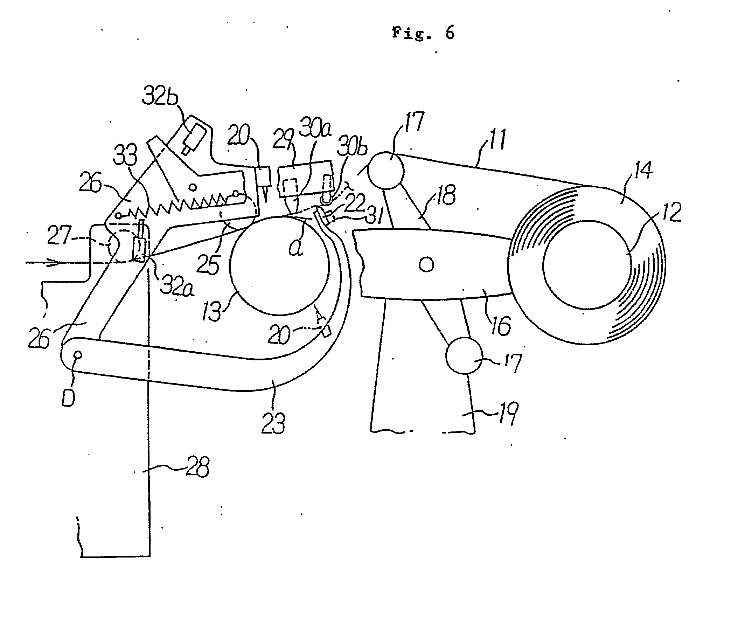

This preferred embodiment is similar to the embodiment shown in Figs. 1 to 4 except for the following points. That is, on the swingable arm 26 are mounted press cylinders 32 consisting of two sets of air cylinders 32a and 32b and electrostatic charging means 20. In addition, the arm 29 is coupled to the arm 26 via a spring 33, on the same arm 26 are provided anti-impact support members (not shown) for supporting the arm 29 in the state shown in Fig. 5 or 6, and the press cylinders 32 and the spring 33 jointly form swing acceleration means. A heater 31 is mounted on the lower surface of the cutter 22 to heat the cutter up to a temperature higher than a melting point of 1 the film. Furthermore on the swingable arm 23 is mounted electrostatic charging means 20 for giving electric charge onto the surface of the core 13.

Description will be made on the operation of the illustrated apparatus in the case of carrying out tapeless winding of the film 11 by making use of the apparatus.

Fig. 5 shows the state of the apparatus at the time point when the mill roll 14 on the right side core 12 as viewed in the figure has reached a full amount. The wound length of the film 11 is measured by a wound length counter not shown, and when it has reached the full amount, the arm 23 is actuated to make the cutter 22 stand by at the position shown in Fig. 6, subsequently the swingable arm 26 is actuated to press the film 11 against the new core 13 by means of the press roll 25, at the same time in response to a signal issued from a control device not shown the air cylinder 32a is actuated to project a rod, so that the rod pushes up the arm 29 to cause the arm 29 to rotate in the clockwise direction about a center point E, and so, the arm 29 rotates while increasing a deformation of the spring 33 until a dead point of the spring 33 is passed. Once the arm 29 has passed the dead point of the spring 33, a restoring force of the spring 33 will accelerate the projecting motion of the air cylinder 32a, and hence the arm 29 will rotate quickly up to the cutting position shown in Fig. 6 as accelerated rapidly. That is, the pair of press members 30 mounted at the tip end of the arm 29 depress the film 11 at a high speed towards the cutter 22, and cut the film 11 momentarily while increasing a tension in the film.

Simultaneously with this cutting, electric charge is given from the electrostatic charging means 20 to a cut end portion a of the film and/or to a surface of the core 13, to make the cut end portion a adsorbed onto the core 13 for wrapping, and thereby automatic cutting and rewinding are carried out in a tapeless manner.

By employing the above-described construction, as shown in Fig. 6, the stop position of the cutter 22 can be brought as close as possible to the core 13 for the purpose of minimizing the cut end portion a of the film 11.

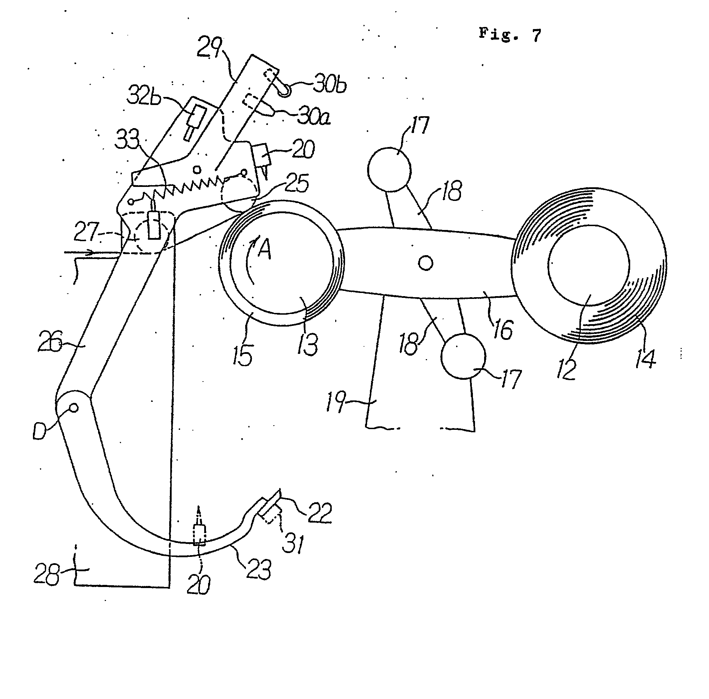

In addition, owing to the fact that the arm 29 having a short arm length and a light weight is pivotably mounted at the tip end portion of the arm 26 and also the cylinders 32 and the spring 33 are used in combination in the above-described manner, high-speed cutting becomes possible with a small swinging operation. Subsequently, when the wrapping has been finished, the arm 23 is actuated to be restored to the state shown in Fig. 7, the air cylinder 32b is actuated to rotate the arm 29 in the anti-clockwise direction until it is restored to the state shown in Fig. 7, and winding of the film 11 for producing the mill roll 15 is carried out on the new core 13.

In the above-described embodiment, the press roll 25 can be used as a lay-on roll for controlling a winding tightness of a mill roll. Furthermore, as the electrostatic charging means, air blow type electrostatic charging means could be employed. The interval between the press bar 30a and the press rod 30b could be made variable so that the appartus can be adapted to change of a type and a thickness of the film, and the air blow nozzle can be provided separately from the press members 30.

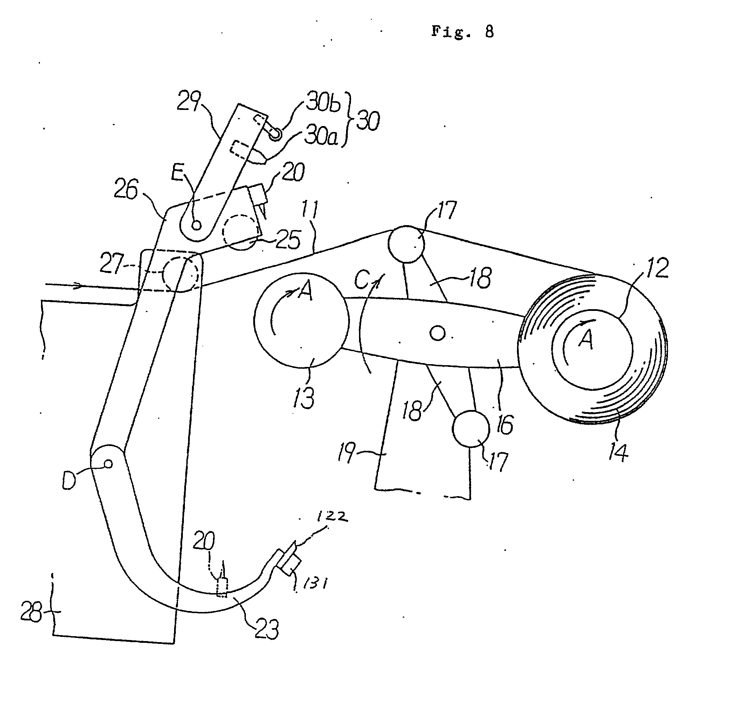

In the following, a third preferred embodiment of the present invention will be described with reference to Figs. 8 to 12.

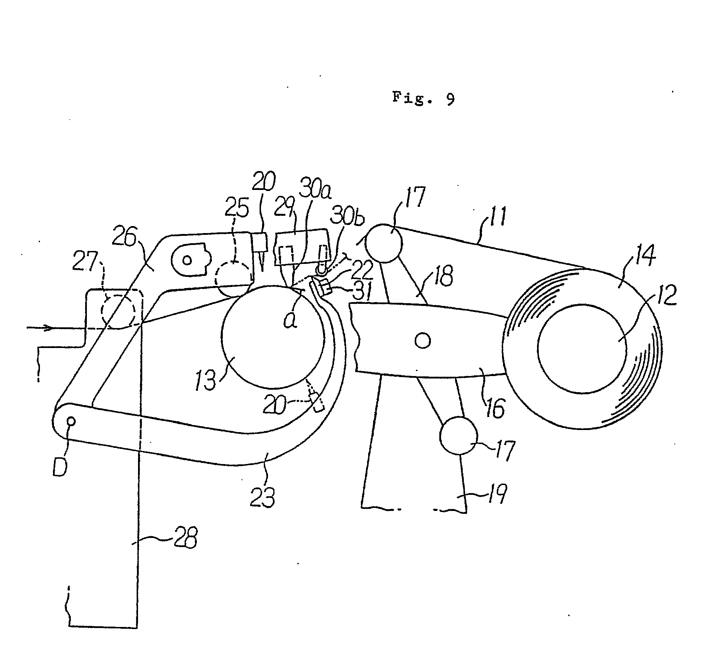

This preferred embodiment is similar to the embodiment shown in Figs. 1 to 4 except for a cutter 122 and a heater 131 as will be described hereunder and shown in Figs. 8 and 9.

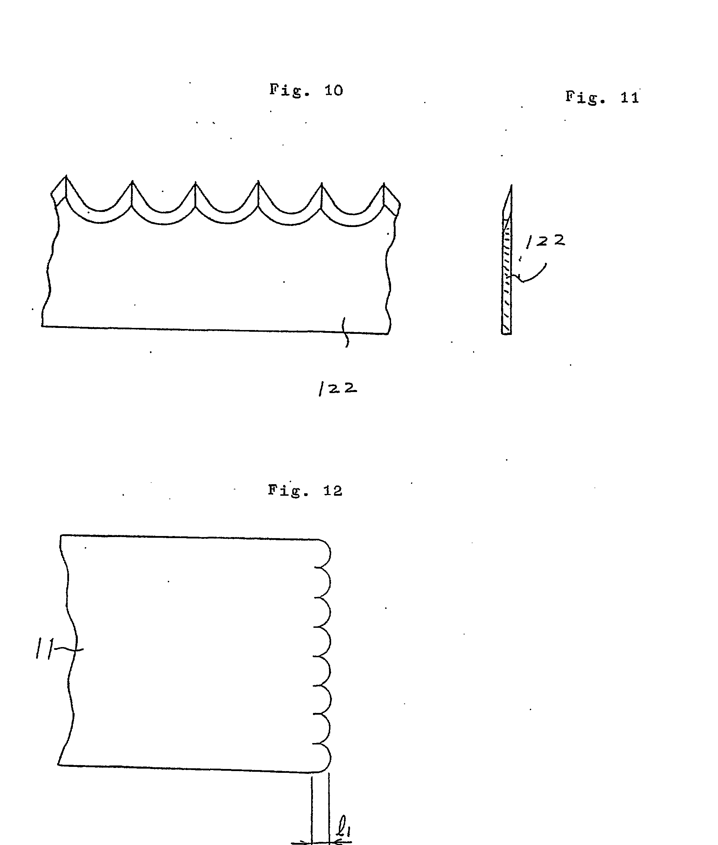

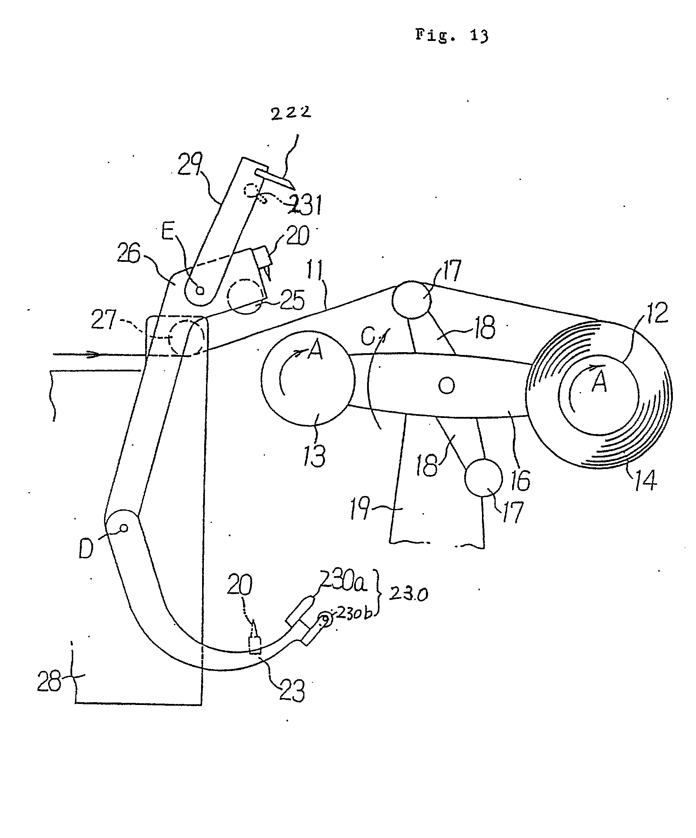

More particularly, a cutter 122 of consecutive semicircle shape as shown in Figs. 10 and 11 and a heater 131 are mounted at the tip end of the arm 23. In this preferred embodiment, upon cutting a film, as shown in Fig. 9 the swingable arm 26 is actuated to press the film 11 against the new core 13 by means of the press roll 25, at the same time the swingable arm 29 is made to descend so that the pair of press members 30 may depress the film 11 towards the cutter 122 which has been heated by the heater 131, and the film 11 is cut momentarily while increasing a tension in the film 11. In this instance, since the cutter 122 has been heated up to a temperature higher than a melting point of the film, the film is momentarily cut by melting, and also since the shape of the cutter 122 is a consecutive semicircle shape, the cut end portion of the film has the configuration shown in Fig. 12, hence a cut length $l_1$ becomes negligibly short, and it can be formed into a stable favorable shape.

Next, a fourth preferred embodiment of the present invention will be described with reference to Figs. 13 to 16.

In these figures, reference numeral 11 designates a film, numerals 12 and 13 designate cores, and these cores 12 and 13 are pivotably supported from the opposite end portions of a turret 16 so as to be rotatable in the direction of an arrow A as driven by a driving device not shown, the turret 16 being mounted on a frame 19 so as to be rotatable about its center in the direction of an arrow C. In addition, arms 18 are provided on the opposite sides of the central portion of the turret 16 as projecting therefrom, and at the tip end portions of the arms 18 are pivot ably supported guide rolls 17, respectively. Reference numeral 14 designates a mill roll formed by winding up the film 11 around the core 12.

On the film feed side of the a above-described frame 19 is disposed another frame 28, on which a guide roll 27 is pivotably mounted along a film feed passageway, and also on the frame 28, adjacent to the guide roll 27 are pivotably mounted swingable arms 26 and 23 which can swing about a same axis D. At the tip end of the swingable arm 23 are mounted a pair of press members 230 consisting of a press bar 230a and a press rod 230b. Also, on the swingable arm 26 are mounted a press roll 25 and electrostatic charging means 20. This electrostatic charging means 20 could be mounted on the swingable arm 23. Furthermore, at the tip end of the swingable arm 26 is pivotably mounted an arm 29 which can likewise swing about a center point E, and at the tip end of the arm 29 is mounted a cutter 222.

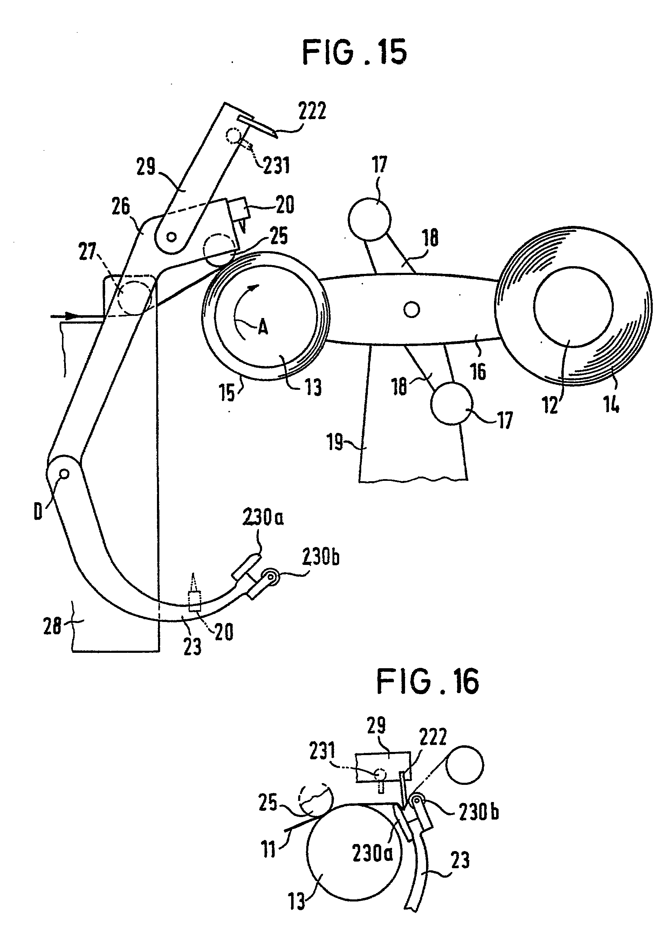

In addition, an air blow nozzle 231 could be mounted at the tip end of the swingable arm 29 so that a film end $\underline{a}$ may be pressed against the core 13 by air as shown in Fig. 16.

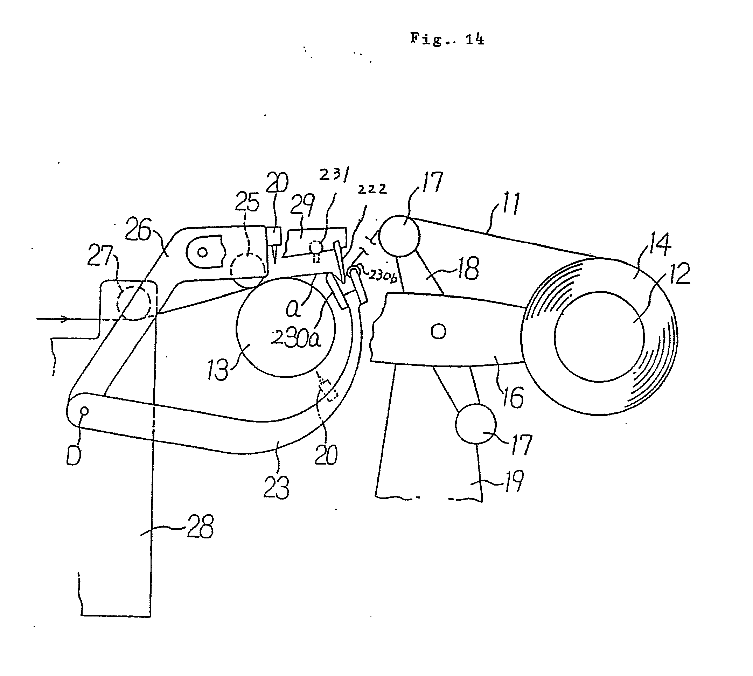

Now description will be made on the operation in the case where tapeless winding of a film is carried out by making use of the apparatus according to the just described embodiment of the present invention. Fig. 13 shows the state of the apparatus at the time point when the mill roll 14 on the right side core 12 as viewed in the figure has reached a full amount. The wound length of the film 11 is measured by a wound length counter not shown, and when it has reached the full amount, the arm 23 is actuated to make the press members 230 stand by at the position shown in Fig. 14, subsequently the swingable arm 26 is actuated to press the film 11 against the new core 13 with the press roll 25, and at the same time the swingable arm 29 is made to descend so that the cutter 222 may press the film 11 against the pair of press members 230a and 230b to cut the film 11 momentarily while increasing a tension in the film.

Simultaneously with the cutting, electric charge is given from the electrostatic charging means 20 to a cut end portion $\underline{a}$ of the film and/or to a surface of the core to make the film cut end $\underline{a}$ adsorbed onto the core 13 for carrying out wrapping, and thus automatic cutting and winding are effected in a tapeless manner. It is to be noted that blowing of air from the air blow nozzle 231 in Fig. 16 is carried out simultaneously with charging by the electrostatic charging means.

By employing the above-described construction, in order to minimize the cut end portion $\underline{a}$ of the film, the pair of press members 230 can be brought as close as possible to the core 13 as shown in Fig. 14. In addition, by pivotably mounting the arm 29, which is short in arm length and light in weight, at the tip end portion of the arm 26, high-speed cutting becomes possible with a small swinging operation.

Subsequently, when the wrapping has been finished, the arms 23 and 26 are actuated to return them to the state shown in Fig. 15, and winding of the film 11 for producing a mill roll 15 is carried out on the new core 13.

In the above-described embodiment, the press roll 25 can be used as a lay-on roll for controlling a winding tightness of a mill roll. Furthermore, as the electrostatic charging means, air blow type electrostatic charging means could be employed.

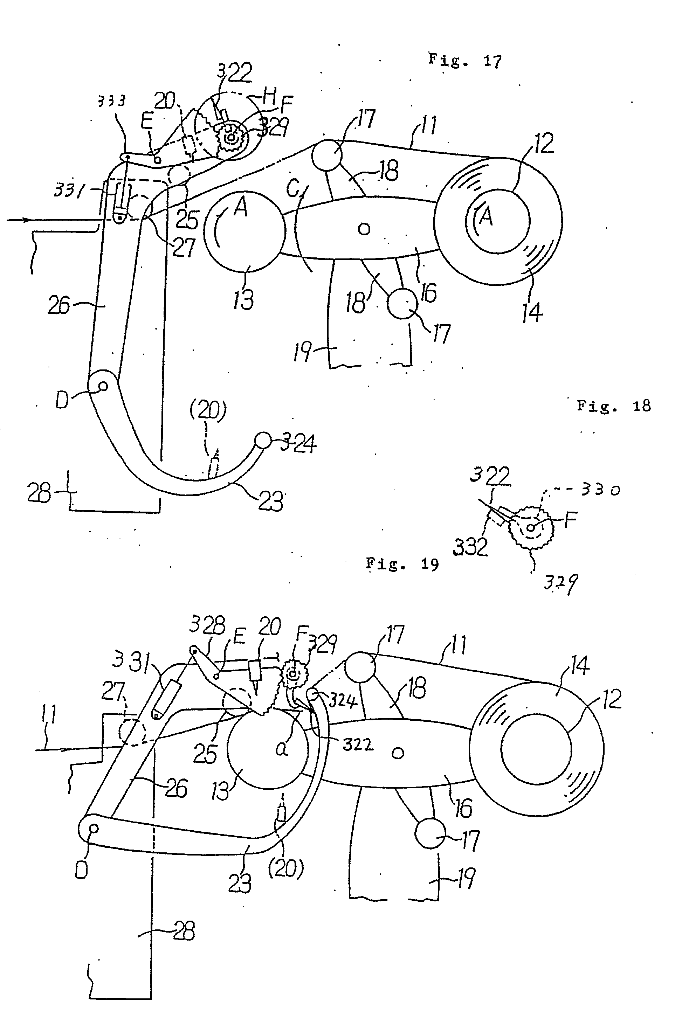

Now, a fifth preferred embodiment of the present invention will be described with reference to Figs. 17 to 22.

This preferred embodiment is a modification of the fourth preferred embodiment shown in Figs. 13 to 16 such that a locus of movement of a cutter is designed so as to extend along the surface of the core, and the respective members as explained hereunder are added to the fourth preferred embodiment.

More particularly, as shown in Figs. 17 to 20 a support member 324 is mounted at the tip end of the swingable arm 23.

On the swingable arm 26, in addition to the press roll 25 and the electrostatic charging means 20, an air cylinder 331, a sector gear 333 adapted to swing about a center point E and a pinion 329 pivotably supported at the tip end Fare provided. An arm 330 is fixedly secured to the pinion 329, and at the tip end of the arm 330 is mounted a cutter 322. It is to be noted that electrostatic charging means 20 could be mounted to the swingable arm 23. The air cylinder 331, sector gear 333, pinion 329, arm 330 and cutter 322 can be provided independently of the pivot axis D.

Next, description will be made on the operation in the case where tapeless winding of the film 11 is carried out by making use of the apparatus according to the just described embodiment of the present invention.

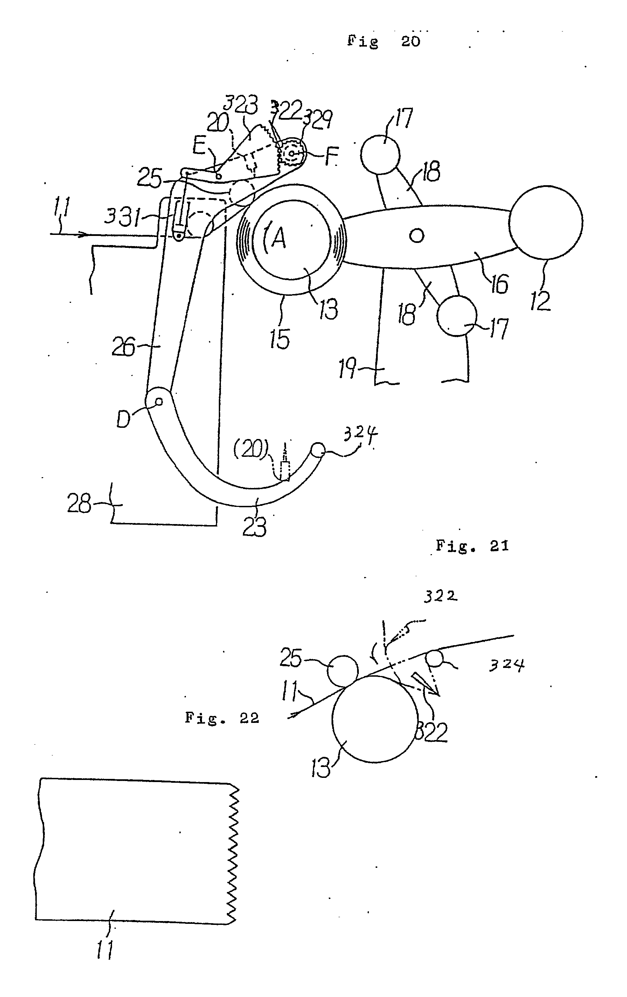

Fig. 17 shows the state of the apparatus at the time point when the mill roll 14 on the right side core 12 as viewed in the figure has reached a full amount. The wound length of the film 11 is measured by a wound length counter not shown, and when it has reached the full amount, the arm 23 is actuated to make a press member 324 stand by at the position shown in Fig. 19, subsequently the swingable arm 26 is actuated to press the film 11 against the new core 13 with the press roll 25, and at the same time the air cylinder 331 is actuated. Then the arm 330 is accelerated via the sector gear 333 and the pinion 329, hence the cutter 322 moves at a high speed along the locus shown in Fig. 21, and it cuts the film 11 momentarily while increasing a tension in the film. Accordingly, the cut edge of the film 11 is improved as shown in Fig. 22, and an unacceptable portion of the film in the case of using the film while paying off the film can be extremely reduced.

In addition, if the press member 324 is brought as close as possible to the core 13 and the distance between the press roll 25 and the support point for the film upon cutting is made short, then the tension upon cutting becomes higher, and the film can be cut easily and finely. It is to be noted that in order to enhance the cutting speed, the movements of the press member 324 and the cutter 322 could be synchronized. Also, for the purpose of improving a cutting efficiency, a heater (heating device) 332 could be associated with the cutter 322 as shown in Fig. 20.

Simultaneously with the cutting, electric charge is given from the electrostatic charging means 20 to a cut end portion a of the film and/or to a surface of the core to make the film cut end a adsorbed onto the core 13 for carrying out wrapping, and thus automatic cutting and winding are effected in a tapeless manner. Owing to the employment of the structure in which rotation is given to only the cutter portion, the cutter portion can be made light in weight. More particularly, since the parts necessitated to be moved for cutting are only the cutter 322, the air cylinder 331, the sector gear 333 and the small arm 330, by appropriately selecting a lever ratio with respect to the air cylinder, the cutting speed and the cutting capability can be easily enhanced.

Subsequently, when the wrapping has been finished, the arm 23 and the cutter 322 are restored to the state shown in Fig. 20, and winding of the film 11 for producing a mill roll 15 is carried out on the new core 13.

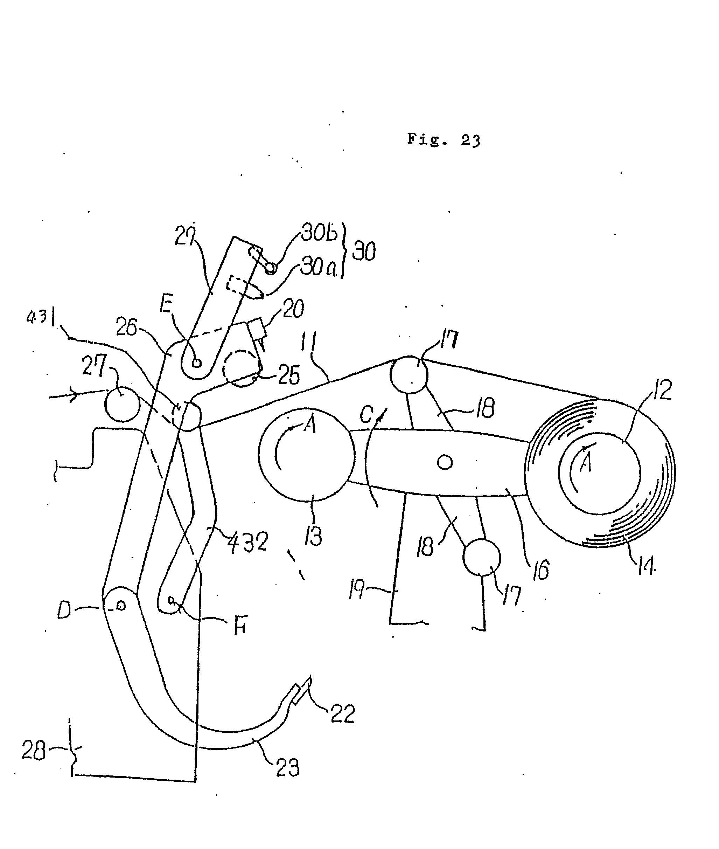

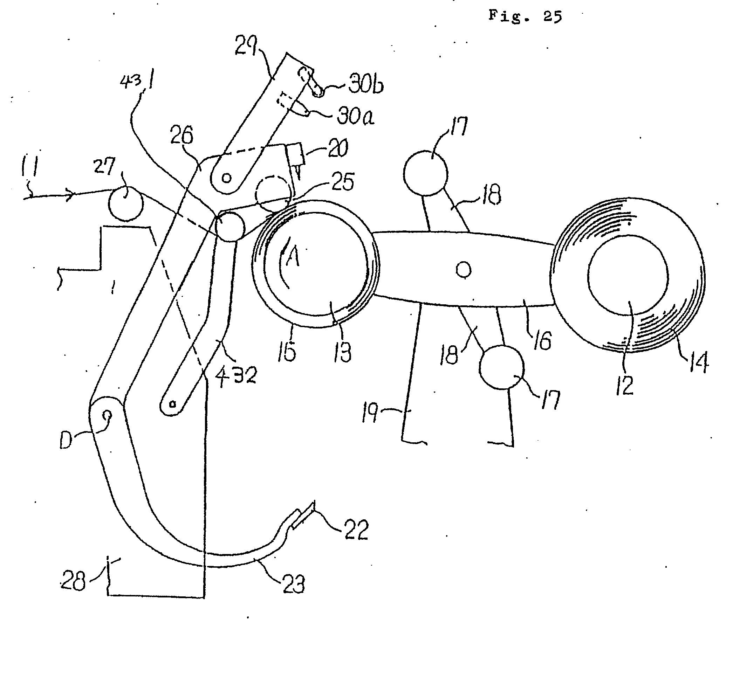

Next, a sixth preferred embodiment of the present invention will be described with reference to Figs. 23 to 28.

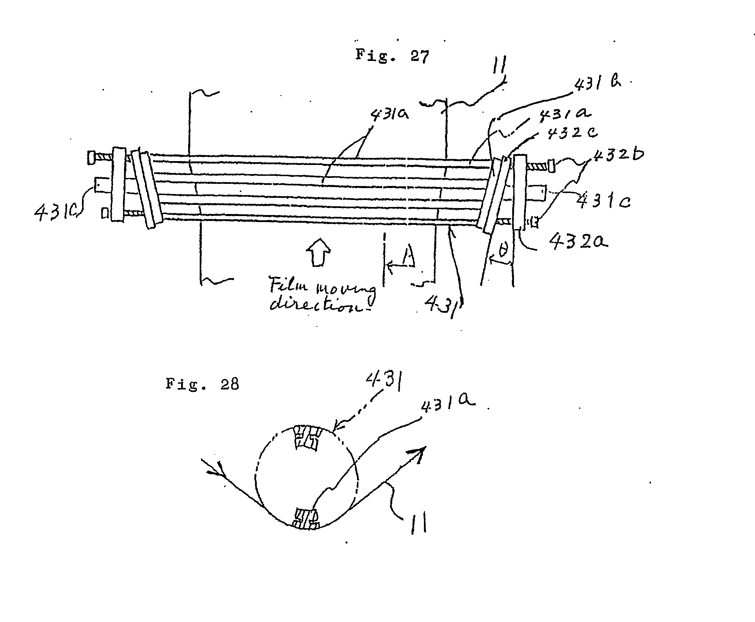

Except for an expander roll and a control mechanism therefor, this preferred embodiment is similar to the first preferred embodiment illustrated in Figs. 1 to 4. More particularly, on the frame 28 is pivotably mounted a swingable arm 432 which can swing about a center point F, and at the tip end of the swingable arm 432 is pivotably supported an expander roll 431. A detailed structure of the expander roll 431 is shown in Figs. 27 and 28. Tip ends of an appropriate number of adjusting bolts 432b threadedly penetrating left and right brackets 432a which are fixed to the swingable arm 432, are held in contact with inclined cams 432c, and these cams 432c can be adjusted in an inclination angle e shown in Fig. 27 by manipulating the adjusting bolts 432b. A shaft 431c of left and right ribs 431b each having a plurality of radial parts, extends externally through center holes in the cams 432c and is pivotably supported by the brackets 432a. The ribs 431b are accommodated in annular grooves of the cams 432c so as to be slidable along the grooves. The ribs 431b and the shaft 431c are so connected with each other that the ribs 431b can rotate in the inclined annular grooves of the cams 432 when ribs 431b rotate with the shaft 431c. Opposite ends of a plurality of rubber bands 431a having the cross-sections shown in Fig. 28 are mounted to the radial parts of the left and right ribs 431b, respectively, at equal angular intervals.

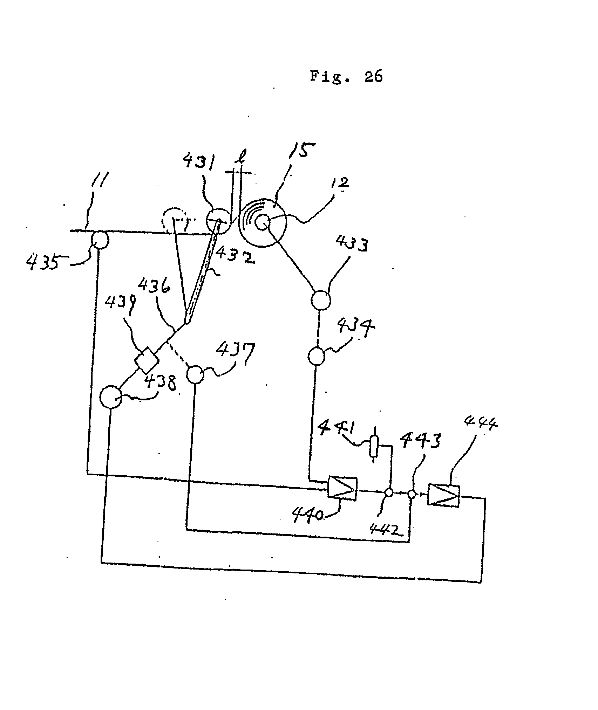

A control mechanism for the position of the above-described expander roll will be explained with reference to Fig. 26.

A core 12 is adapted to be driven in rotation by a variable speed motor 433, and a rotational speed detector 434 coupled to the variable speed motor 433 for detecting the rotational speed of the motor 433 is provided. Reference numeral 435 designates a speed detector for detecting a winding speed, i.e., a traveling speed of a film, numeral 431 designates an expander roll that is rotatably supported by an arm 432, and this arm 432 is formed integrally with a shaft 436. Reference numeral 437 designates an angle detector for detecting a rotational angle of the shaft 436, and numeral 438 designates a motor, which rotates the above-mentioned shaft 436 via a reduction gear 439 and thereby the arm 432 is made to swing about an axis of the shaft 436. It is to be noted that the above-described shaft 436, angle detector 437, motor 438 and reduction gear 439 are supported from the winding apparatus by means not shown.

In addition, reference numeral 440 designates a wound film diameter detector, numeral 441 designates a gap setter for setting a gap distance between the surfaces of the expander roll 431 and the mill roll 15, numeral 442 designates an adder, numeral 443 designates a comparator and numeral 444 designates a controller coupled to the motor 433.

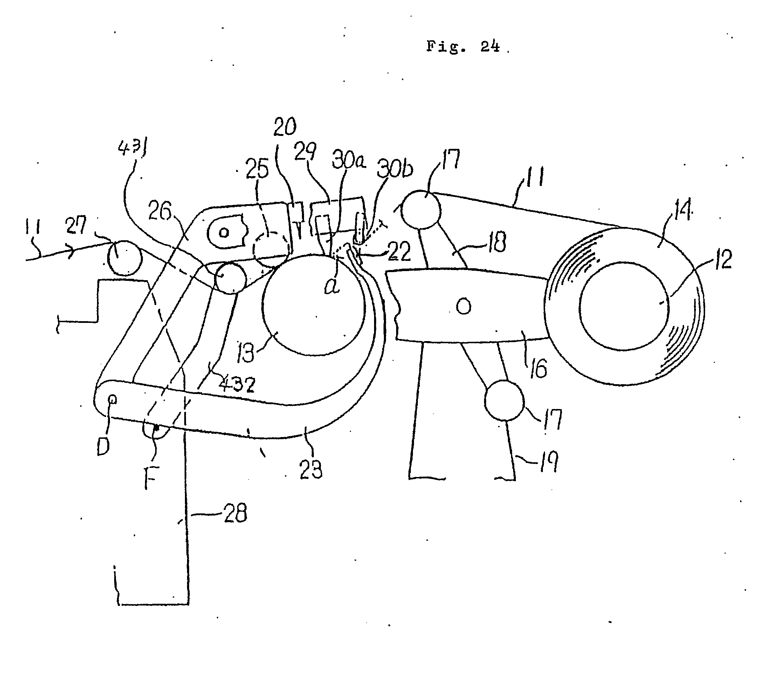

The operations of rewinding and cutting a film are shown in Figs. 23 and 24, but since the operations are similar to those in the first preferred embodiment described above, further explanation thereof will be omitted. Once the cutting and rewinding of the film has been finished, the film 11 would be wound around a new core 13 after it passes over a guide roll 27 and comes into contact with the expander roll 431.

In this instance, in the expander, roll 431, since the inclined cams 432c are inclined by an appropriate angle by manipulating the adjusting bolts 432b, as a result of slide movement of the ribs 431b along the annular grooves in the cams 432c, the rubber bands 431a of the expander roll 431 would stretch and contract as the expander roll 431 rotates. As shown in Fig. 27, by fastening the adjusting bolts 432b on the inlet side for the film 11 and relaxing the bolts 432b on the outlet side, the rubber bands would contract on the inlet side for the film and would stretch on the outlet side, hence the film 11 coming into contact with these rubber bands 431a is stretched uniformly by the stretch and contract of the rubber bands 431a, and thereby longitudinal creases generated on the film 11 can be removed.

Moreover, as will be explained in the following, the expander roll 431 is positioned so as not to come into contact with the mill roll, and also upon winding of the film, so as to come close to the mill roll always with a fixed minute interval maintained from the mill roll, and therefore, a film path through a fixed interval can be always maintained from the beginning of winding up to the end of winding. Accordingly, longitudinal creases generated so far would be removed just prior to winding of the film, and generation of winding creases in a mill roll can be prevented. As a result, an excellent mill roll that is free from winding creases, can be formed.

The above-described position control for the expander roll 431 will be described with reference to Fig. 26. A film 11 is wound around the core 13 that is driven by the high-speed motor 433, via the speed detector 435 and the expander roll 431. When the film 11 begins to be wound around the core 13, the expander roll 431 placed at the position indicated by double-dot chain lines in Fig. 26 is advanced to the position indicated by solid lines, and expander roll 431 stops at a gap width (a dimension $l$ in Fig. 26) that is preset by the gap setter 441.

In control, a film winding speed is detected by the speed detector 435, a rotational speed of the mill roll is detected by the rotational speed detector 434, the respective speeds are input to the wound film diameter detector 440, in which the wound film diameter of the mill roll 15 is calculated through an electrical process, and the calculated value is input to the adder 442 as a reference position instruction adapted for the expander roll 431. It is to be noted that the calculation of the wound film diameter of the mill roll 15 is conducted according to the following formulae:

$$D = \frac{1}{\pi} \cdot \frac{V}{N} \ (m)$$

$$\text{that is,} \quad D \propto \frac{V}{N}$$

where
V: film speed (m/min.)
N: rotational speed of a mill roll (r.p.m.)
π: the circular constant (dimensionless)
D: wound film diameter of a mill roll (m)

In the adder 442, the reference position instruction value sent from the wound film diameter detector 440 and the preset gap value sent from the gap setter 441 are added together, and the sum is input to the comparator 443 as a control position instruction for the expander roll 431. On the other hand, the angle detector 437 detects the position of the expander roll 431 via the arm 432 and the shaft 436, and the position information is fed back to the comparator 443. In the comparator 443, the control position instruction sent from the adder 442 is compared with the position information sent from the angle detector 437.

Furthermore, the electrical signal generated as a result of comparative operations in the comparator 443 is input to the controller 444, in which it is determined whether or not the expander roll 431 is placed at a predetermined position, and if the expander roll 431 advanced too much, a retract signal is applied to the motor 438, while if it advanced insufficiently, an advance signal is applied to the motor 438, and in this way automatic control for the position of the expander roll 431 is effected. Thus, the diameter of the mill roll which increases as time elapses, is detected, and the film 11 is wound around the core 13 while controlling the position of the backwardly moving expander roll 431 so that the preset gap width $l$ may be maintained always constant. Once a predetermined amount of film 11 has been wound around the core 13, the expander roll 431 is retracted up to the position (the position shown by double-dot chain lines in Fig. 26) where the expander roll 431 does not hinder the rotation of the turret 16. It is to be noted that the above-described position control is effected by a closed-loop control system consisting of the rotational speed detector 434, speed detector 435, wound film diameter detector 440, gap setter 441, adder 442, angle detector 437, comparator 443, controller 444, motor 438, reduction gear 439 and shaft 436. The control system should not be limited to that illustrated in Fig. 26, but modification can be made thereto such that, for example, the mechanical rotary structure coupling the motor 438, reduction gear 439, shaft 436 and arm 432 is replaced by a hydraulic or pneumatic rotary structure or reciprocating structure.

As described above, in the last-mentioned preferred embodiment, since the expander roll 431 is positioned as spaced from the mill roll by a fixed small interval from the beginning of winding of the film up to the end of winding and just before the film is wound around the core 13, longitudinal creases produced so far in the film can be removed, generation of winding creases in the mill roll 15 can be prevented, and consequently excellent mill rolls which are free from winding creases, can be formed.

As described in detail above, according to the present invention, since winding of a film can be carried out with a cut end of the film adsorbed onto a core by giving electric charge to the film simultaneously with cutting of the film, in tapeless winding there is no need to embrace a core with a film before cutting, hence the film portion at the end of winding of a mill roll which comes into contact with a core and which is subjected to scratches and is wasted, is eliminated, and therefore, a yield of the film can be greatly improved.

In addition, since a pair of press members for pressing a film against a cutter and a cutter coming into press contact with a film for cutting the film are disposed as opposed to each other with the film intervening therebetween, a tension in the film upon cutting is increased by the pair of press members, and moreover, since the pair of press members press the film so as to hardly escape from the cutter, a cut end of the film can take a good cutting configuration. Therefore, there is an advantage that an unacceptable portion of a film in the case of rewinding a film wound in a mill roll for use can be remarkably reduced. The above-mentioned advantage becomes, more remarkable as the cutting and winding speed becomes higher.

Also, according to the present invention, since a pair of press members for pressing a film against a cutter and a cutter coming into press contact with a film for cutting the film are disposed as opposed to each other with the film intervening therebetween and also a device for increasing a swinging speed of the press members is provided, a tension in the film upon cutting is increased by the pair of press members, and moreover, since the pair of press members press the film so as to hardly escape from the cutter, high speed cutting becomes possible, and a cut end of the film can take a good cutting configuration. Furthermore, by heating a cutter up to a temperature higher than a melting point of a film by means of a heater mounted to the cutter, the cutting can be made reliable.

Further, according to the present invention, by employing a cutter of consecutive semicircle shape as a heatable cutter, cutting of a film can be achieved reliably and with a reduced cut end length.

Moreover, according to the present invention, since a pair of support members and a cutter coming into press contact with a film for cutting the film are disposed as opposed to each other with the film intervening therebetween and the cutter moves to come in between the pair of support members to cut the film, a tension in the film upon cutting is increased, and furthermore, since the pair of support members press the film so as to hardly escape from the cutter, a cut end of the film can take a good cutting configuration.

Also, according to the present invention, since a cutter rotary shaft is provided in a cutter adapted to come in between the pair of support members so that the cutter can move at a high speed along a surface of a core, upon cutting a film a cut end of the film and its proximity is guided so as to extend along the core and floating of the film from the core is reduced, and therefore, simultaneously with cutting the film is adsorbed smoothly onto the surface of the core, and separation or floating of the film cut end from the core surface would not occur. This perfectly eliminates fold-back phenomena of the cut end of the film, creases caused by folding back can be preliminarily prevented, and therefore, the present invention can provide great advantages in that a yield of a mill roll is improved and beautification of a would configuration is brought about. In addition, since support members and a cutter are disposed in the proximity of a cutting position of a film as opposed to each other with a film intervening therebetween and a cutting speed is raised, the film can be cut by the cutter without being broken and the cut end portion of the film can be improved into the configuration shown in Fig. 22. Consequently, there is an advantage that an unacceptable portion of a film in the case of paying off a film wound into a mill roll for use, can be remarkably reduced. The above-mentioned advantage becomes more remarkable as the cutting and winding speed becomes higher.

Furthermore, according to the present invention, since winding is effected while removing longitudinal creases generated so far by means of an expander roll just before winding the film around a core, excellent mill rolls which are free from creases can be obtained. Consequently, there is an advantage that an unacceptable portion of a film in the case of rewinding a film wound into a mill roll for use, can be remarkably reduced. The above-mentioned advantage becomes more remarkable as the cutting and winding speed becomes higher as the width of the film becomes broader.

Since many changes and modifications in design can be made to the above-described construction without departing from the scope of the present invention as defined in the appended claim, it is intended that all matter contained in the above description and illustrated in the accompanying drawings shall be interpreted to be illustrative and not in a limiting sense.

## Claims

1. A turret type automatic cutting and winding apparatus for automatically winding a web-like material (11) such as a film or the like successively onto one of two cores (12, 13) supported from opposite end portions of a turret (16), which is rotated in a handing over position wherein, with respect to the feeding direction of the web-like material (11), a new one (13) of said two cores is located upstream of the other core (12) onto which a mill roll (14) has been wound to full amount, said apparatus further comprising a press roll (25) mounted on a swingable arm (26) and adapted to press the web-like material (11) in the handing over position against the empty core (13), a cutter (22, 122, 222, 322) mounted to a swingable arm (23, 26) and adapted to cut the web-like material (11) in the handing over position downstream of said new core (13) and an electrostatic charging means (20,) mounted on a swingable arm (23, 26) for giving electrostatic charge onto an upstream cut end portion (a) of said web-like material (11) and/or onto the surface of the new core for making said cut end portion (a) absorbed onto the empty core (13), characterized by a pair of press members (30, 230) mounted on a swingable arm (23, 29) for positioning the cutter (22) in the handing over position between the press members (30), one of which being disposed upstream and the other down-stream of the cutter (22, 122, 222, 322) for depressing the web-like material (11) towards the cutter (22, 122, 222, 322) to thereby increase the tension in the web-like material (11) to cut it momentarily.

2. The apparatus according to claim 1, characterized in that the swingable arm (23, 29) to which the pair of press members (30, 230) is mounted, is actuated prior to an actuation of the swingable arm (23, 26) to which the cutter (22, 122, 222, 322) is mounted in order to make the pair of press members (30, 230) stand by before the web-like material (11) is pressed against the pair of press members (30, 230) by means of the cutter (22, 122, 222, 322).

3. The apparatus according to claim 1, characterized in that the swingable arm (23, 26) to which the cutter (22, 122, 222, 322) is mounted, is actuated prior to an actuation of the swingable arm (23, 29) to which the pair of press members (30, 230) is mounted in order to make the cutter (22, 122, 222, 322) stand by before the web-like material (11) is pressed against the cutter (22, 122, 222, 322) by means of the pair of press members (30, 230).

4. The apparatus according to one of claims 1 to 3, characterized by an air blow nozzle (30c, 231) which is disposed in the proximity of said electrostatic charging means (20).

5. The apparatus according to one of claims 1 to 4, characterized in that the pair of press members (30) is provided with swing acceleration means (33) to make said press members (30) to come into the position vis-à-vis the cutter (22) at a high speed.

6. The apparatus according to claim 5, characterized in that the swing acceleration means consists of a spring (33) disposed between the swingable arm (29) to which the pair of press members (30) is mounted and a member (26) for mounting said arm (29), and press cylinders (32a, b) for actuating said swingable arm (29).

7. The apparatus according to one of claims 1 to 6, characterized in that said cutter (22, 122) is provided with a heater (31, 131) and has a consecutive semicircular shape.

8. The apparatus according to claim 1, characterized that said electrostatic charging means (20) are disposed on the swingable arm (23) to which the cutter (22) is mounted and/or on the swingable arm (23) to which the pair of press members (230) is mounted.

9. The apparatus according to one of the preceeding claims, characterized in that the locus of movement upon cutting of said cutter (22), 122, 222, 322) is designed so as to extend along a surface of the empty core (13).

10. The apparatus according to one of the preceeding claims, characterized by an expander roll (431) coming into contact with said web-like material (11) and being disposed at a position upstream of that core (14) to which the weblike material is wound, and close to the mill roll (14) formed around that core (12).

11. The apparatus according to claim 10, characterized in that said expander roll (431) is formed of a pair of inclined cams (432c), a pair of rotary members (431b) which slide in annular grooves of said inclined cams (432c), and a plurality of rubber bands (431a) having their opposite end portions mounted to said rotary members (431b).

## Patentansprüche

1. Automatischer Trenn- und Wickelapparat vom Revolvertyp zum automatischen Wickeln eines bandförmigen Materials (11), wie zum Beispiel Film oder dgl. auf einen von zwei Kernen (12, 13), die von gegenüberligenden Endabschnitten eines Revolverkopfs (16) aufgenommen sind, der in eine Übergabestellung gedreht wird, in welcher mit Bezug auf die Zuführrichtung des bandförmigen Materials (11) eine neue (13) der beiden Spulen stromauf des anderen Kerns (12) angeordnet ist, auf den ein Bandmaterialwickel (14) in vollem Umfang aufgewickelt worden ist, wobei der Apparat weiterhin eine Anpreßrolle (25) umfaßt, die auf einem Schwenkarm (26) angebracht und dazu ausgelegt ist, das bandförmige Material (11) in der Übergabestellung gegen den leeren Kern (13) anzudrücken, eine Trennvorrichtung (22, 122, 222, 322), die an einem Schwenkarm (23, 26) angebracht und dazu ausgelegt ist, das bandförmige Material (11) in der Übergabestellung stromab des neuen Kerns (13) zu durchtrennen, und elektrostatische Aufladeeinrichtungen (20), die auf einem Schwenkarm (23, 26) angebracht sind und dazu dienen, elektrische Ladung an einen stromaufwärtigen abgetrennten Endabschnitt (a) des bandförmigen Materials (11) und/oder an die Oberfläche des neuen Kerns abzugeben, um dadurch den abgetrennten Endabschnitt (a) zum Haften an dem leeren Kern (13) zu veranlassen, gekennzeichnet durch ein Paar von Drückteilen (30, 230), die auf einem Schwenkarm (23, 29) zum Positionieren der Abtrennvorrichtung (22) in der Übergabestellung zwischen den Drückteilen (30) angebracht sind, von denen eines stromauf und das andere stromab von der Trennvorrichtung (22, 122, 222, 322) zum Niederdrücken des bandförmigen Materials (11) auf die Schneidvorrichtung (22, 122, 222, 322) mit dem Ziel angeordnet ist, die Spannung im bahnförmigen Material (11) zwecks dessen augenblicklicher Durchtrennung zu erhöhen.

2. Apparat nach Anspruch 1, dadurch gekennzeichnet, daß der Schwenkarm (23, 29), auf dem das Paar von Drückteilen (30, 230) angebracht ist, nach einer Betätigung des Schwenkarms (23, 26), auf dem die Trennvorrichtung (22, 122, 222, 322) angebracht ist, betätigt wird, um das Paar von Drückteilen (30, 230) zum Stillstand zu bringen, bevor das bandförmige Material (11) mittels der Trennvorrichtung (22, 122, 222, 322) gegen das Paar von Drückteilen (30, 230) angedrückt wird.

3. Apparat nach Anspruch 1, dadurch gekennzeichnet, daß der Schwenkarm (23, 26), auf dem die Trennvorrichtung (22, 122, 222, 322) angebracht ist, nach einer Betätigung des Schwenkarms (23, 29), auf dem die Drückteile (30, 230) angebracht sind, betätigt wird, um die Trennvorrichtung (22, 122, 222, 322) zum Stillstand zu bringen, bevor das bandförmige Material (11) mittels des Paares von Drückteilen (30, 230) gegen die Trennvorrichtung (22, 122, 222, 322) angedrückt wird.

4. Apparat nach einem der Ansprüche 1 bis 3, gekennzeichnet durch eine Luftblasedüse (30c, 231), die in der Nähe der elektrostatischen Aufladeeinrichtungen (20) angeordnet ist.

5. Apparat nach einem der Ansprüche 1 bis 4, dadurch gekennzeichnet, daß das Paar von Drückteilen (30) mit einer Schwenkbeschleunigungseinrichtung (33) versehen ist, die dazu dient, die Drückteile unter hoher Geschwindigkeit in Gegenüberlage zur Trennvorrichtung (22) zu überführen.

6. Apparat nach Anspruch 5, dadurch gekennzeichnet, daß die Schwenkbeschleunigungseinrichtung aus einer Feder (33) besteht, die zwischen dem Schwenkarm (29), auf dem das Paar von Drückteilen (30) angebracht ist, und einem Teil (26) zum Haltern des Arms (29) sowie Andrückzylindern (32a, b) zum Betätigen des Schwenkarms (29() angeordnet ist.

7. Apparat nach einem der Ansprüche 1 bis 6, dadurch gekennzeichnet, daß die Trennvorrichtung (22, 122) mit einer Heizvorrichtung (31, 131) versehen ist und eine aufeinanderfolgend halbkreisförmige Gestalt bzw. einen Wellenschliff aufweist.

8. Apparat nach Anspruch 1, dadurch gekennzeichnet, daß die elektrostatische Aufladeeinrichtungen (20) auf dem Schwenkarm (23), auf dem die Trennvorrichtung (22) angebracht ist und/oder auf dem Schwenkarm (23), auf dem das Paar von Drückteilen (230) angebracht ist, angeordnet sind.

9. Apparat nach einem der vorangehenden Ansprüche, dadurch gekennzeichnet, daß die Bewegungskurve der Trennvorrichtung (22, 122, 222, 322) beim Trennvorgang so ausgelegt ist, daß sie entlang der Oberfläche des leeren Kerns (13) verläuft.

10. Apparat nach einem der vorangehenden Ansprüche, gekennzeichnet durch eine Breitstreckwalze (431), die in Berührung mit dem bandförmigen Material (11) steht und in einer Stellung stromauf desjenigen Kerns (14) angeordnet ist, auf welchen das bandförmige Material gewickelt wird, sowie in der Umgebung des um diesen Kern (12) gebildeten Bandmaterialwickels (14).

11. Apparat nach Anspruch 10, dadurch gekennzeichnet, daß die Breitstreckwalze (431) aus einem Paar geneigter Kurvenscheiben (432c) besteht, einem Paar von Drehteilen (431b), die in ringförmigen Nuten der Kurvenscheiben (432c) gleiten, sowie einer Mehrzahl von Gummibändern (431a), deren gegenüberliegende Endabschnitte an die Drehteile (431b) angeschlossen sind.

## Revendications

1. Un appareil automatique de découpage et d'enroulement du type à tourelle pour enrouler automatiquement une matière en forme de bande (11), comme un film ou analogue, successivement sur l'un de deux noyaux (12, 13) supporté à partir de parties extrêmes opposées d'une tourelle (16), qui est amenée par rotation dans une position de délivrance dans laquelle, en relation avec la direction d'avancement de la matière en forme de bande (11), un nouveau noyau (13) parmi les deux précités est positionné en amont de l'autre noyau (12) sur lequel une bobine (14) a été enroulée complètement, ledit appareil comprenant en outre un rouleau de pression (25) monté sur un bras pivotant (26) et adapté pour appliquer la matière en forme de bande (11) dans la position de délivrance contre le noyau vide (13), un organe de coupe (22, 52, 222), 322) monté sur un bras pivotant (23, 26) et adapté pour couper la matière en forme de bande (11) dans la position de délivrance en aval dudit nouveau noyau (13) et un moyen de charge électrostatique (20), monté sur un bras pivotant (23, 26) pour produire une charge électrostatique sur une partie extrême découpée d'amont (a) de ladite matière en forme de bande (11) et/ou sur la surface du nouveau noyau pour faire en sorte que ladite partie extrême découpée (a) soit adsorbée sur le noyau vide (13), caractérisé par une paire d'éléments de pression (20, 230) montés sur un bras pivotant (23, 29) pour positionner l'organe de coupe (22) dans la position de délivrance entre les éléments de pression (30), dont l'un est disposé en amont et l'autre en aval de l'organe de coupe (22, 122, 222, 322) pour abaisser la matière en forme de bande (22) en direction de l'organe de coupe (22, 122, 222, 322) afin d'augmenter la tension dans la matière en forme de bande (11) pour la découper momentanément.

2. L'appareil selon la revendication 1, caractérisé en ce que le bras pivotant (23, 29) sur lequel est montée la paire d'éléments de pression (30, 230) est actionné avant un actionnement du bras pivotant (23, 26) sur lequel est monté l'organe de coupe (22, 122, 222, 322) de façon à rendre disponible la paire d'éléments de pression (30, 230) avant que la matière en forme de bande (11) soit appliquée contre les deux éléments de pression (30, 230) sous l'action de l'organe de coupe (22, 122, 222, 322).

3. L'appareil selon la revendication 1, caractérisé en ce que le bras pivotant (23, 26) sur lequel est monté l'organe de coupe (22, 122, 222, 322) est actionné avant un actionnement du bras pivotant (23, 29) sur lequel est monté la paire d'éléments de pression (30, 230) de façon à rendre l'organe de coupe (22, 122, 222, 322) disponible avant que la matière en forme de bande (11) soit appliquée contre l'organe de coupe (22, 122, 222, 322) sous l'action des deux éléments de pression (30, 230).

4. L'appareil selon une des revendications 1 à 3, caractérisé par une buse de soufflage d'air (30c, 231) qui est disposée à proximité dudit moyen de charge électrostatique (20).

5. L'appareil selon une des revendications 1 à 4, caractérisé en ce que la paire d'éléments de pression (30) est pourvue de moyens d'accélération de pivotement (33) pour faire en sorte que lesdits éléments de pression (30) viennent se placer rapidement dans la position située en vis-à-vis de l'organe de coupe (22).

6. L'appareil selon la revendication 5, caractérisé en ce que les moyens d'accélération de pivotement se composent d'un ressort (33) disposé entre le bras pivotant (29) sur lequel est montée la paire d'éléments de pression (30) et un élément (26) de support dudit bras (29) et des cylindres de pression (32a, b) pour actionner ledit bras pivotant (29).

7. L'appareil selon une des revendications 1 à 6, caractérisé en ce que ledit organe de coupe (22, 122) est pourvu d'un élément chauffant (31, 131) et a une forme de demi-cercle continu.

8. L'appareil selon la revendication 1, caractérisé en ce que lesdits moyens de charge électrostatique (20) sont disposés sur le bras pivotant (23) sur lequel est monté l'organe de coupe (22) et/ou sur le bras pivotant (23) sur lequel est montée la paire d'éléments de pression (230).

9. L'appareil selon une des revendications précédentes, caractérisé en ce que le lieu de déplacements dudit organe de coupe (22, 122, 222, 322) lors de la coupe est conçu de manière à s'étendre le long d'une surface du noyau vide (13).

10. L'appareil selon une des revendications précédentes, caractérisé par un rouleau d'expansion (431) entrant en contact avec ladite matière en forme de bande (11) et disposé dans une position située en amont du noyau (12) sur lequel est enroulée la matière en forme de bande, et proche de la bobine (14), formée autour de ce noyau (12).

11. L'appareil selon la revendication 10, caractérisé en ce que ledit rouleau d'expansion (431) est formé d'une paire de cames inclinées (432c), d'une paire d'éléments rotatifs (431b) qui coulissent dans des rainures annulaires desdites cames inclinées 432c, et d'une pluralité de bandes de caoutchouc (431a) dont des parties extrêmes opposées sont fixées sur lesdits éléments rotatifs (431b).

Fig. 1

Fig. 2

Fig. 3

Fig. 4

Fig. 5

Fig. 6

Fig. 7

Fig. 8

Fig. 9

Fig. 10

Fig. 11

/22

122

Fig. 12

11

$\ell_1$

Fig. 13

Fig. 14

# FIG.15

# FIG.16

Fig. 17

Fig. 18

Fig. 19

Fig 20

Fig. 21

Fig. 22

**EP 0 237 903 B1**

Fig. 23

Fig. 24

Fig. 25

Fig. 26

Fig. 27

431a

431 b
431 a
432 c
432 b
431 c
432a

431C

θ

↑

Film moving
direction

431

Fig. 28

431
431a

11